# DEMANDE DE BREVET EUROPEEN

(11) **EP 0 916 939 A1**
(43) Date de publication de la demande: **19.05.1999**
(21) Numéro de dépôt: 98402783.9
(22) Date de dépôt: 10.11.1998
(51) Int. Cl.: G01N 23/20

(54) **Porte-echantillon pour analyse de caracteristiques cristallographiques**

(30) Priorité: 12.11.1997 FR 9714159
(71) Demandeur: COMMISSARIAT A L'ENERGIE ATOMIQUE, 75015 Paris (FR); COMPAGNIE GENERALE DES MATIERES NUCLEAIRES, 78140 Vélizy Villacoublay (FR)
(72) Inventeur: Buisson, Patrice, 84120 Pertuis (FR); Bonifay, Daniel, 13100 Aix en Provence (FR); Grandidier, Jean, 13770 Venelles (FR)
(74) Mandataire: Ilgart, Jean-Christophe

(57) **Abrégé**

Le porte-échantillon comprend en particulier un corps creux (1) contenant deux mors (7, 8) mutuellement mobiles et rapprochés par des ressorts (10), entre lesquels l'échantillon peut être serré à une hauteur choisie par l'utilisateur, par exemple pour affleurer à une ouverture (13) d'un couvercle (12) où le rayonnement d'étude est focalisé. Un fond amovible (3) et une feuille transparente collée à des excroissances (14) du couvercle (12) permettent d'isoler l'échantillon de l'extérieur. Un tel dispositif peut être utilisé en diffractométrie aux rayons X et dans d'autres appareils.

## Description

Le sujet de cette invention est un porte-échantillon pour faire une analyse de caractéristiques cristallographiques d'un échantillon solide ou massif, par opposition à des échantillons pulvérulents.

Un problème essentiel à résoudre pour des procédés d'étude tels que la diffractométrie aux rayons X est de placer avec une grande précision l'échantillon au point de focalisation du rayonnement incident. Cela revient à placer un échantillon à la bonne hauteur dans un porte-échantillon situé dans un emplacement donné de l'appareil de mesure. Il est facile de satisfaire à cette exigence avec des échantillons pulvérulents, car il suffit d'emplir un porte-échantillon formé en coupelle jusqu'à la hauteur souhaitée, mais cela devient impraticable avec des échantillons solides, qui n'ont généralement pas les dimensions souhaitées.

L'objet de l'invention est donc la conception d'un porte-échantillon placé à un endroit déterminé d'un dffractomètre à rayons X et logeant l'échantillon tout en le maintenant à la hauteur voulue sans préjudice de ses dimensions. Il comprend un corps creux à fond amovible et à sommet, opposé au fond, percé d'une ouverture, un étau contenu dans le corps et composé d'un mors immobile fixé au corps, d'un mors mobile perpendiculairement à l'ouverture et d'un système de liaison entre les mors comprenant un ressort rappelant le mors mobile vers le mors immobile -les mors délimitant une empreinte de serrage de l'échantillon- et deux excroissances en demi-lune montées sur le sommet, parallèles, encadrant l'ouverture et équipées de surfaces de support d'une feuille transparente dont le but est de préserver l'étanchéité du porte-échantillon une fois que l'échantillon y est monté.

Les éléments essentiels de l'invention seront mieux compris à l'aide des figures suivantes, annexées à titre illustratif et non limitatif :

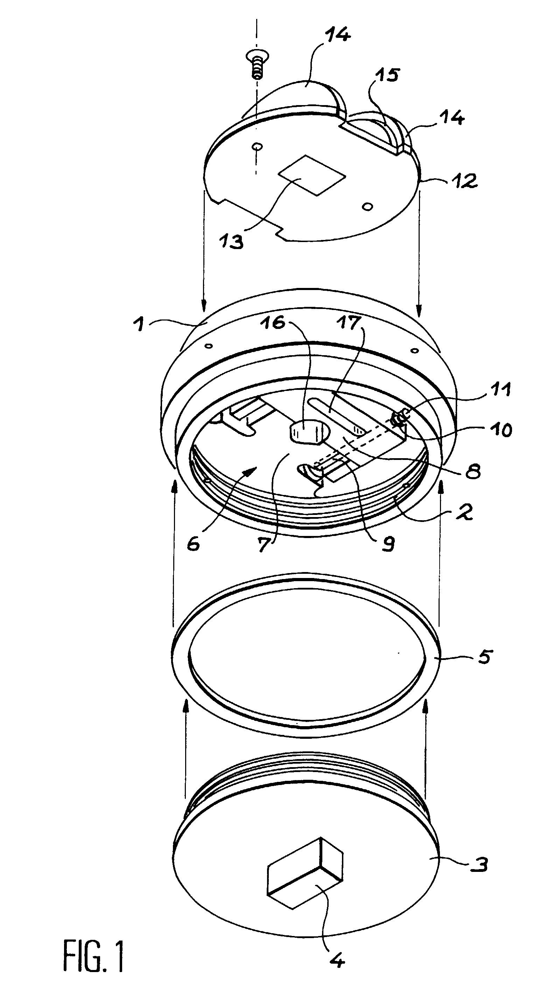

- la figure 1 est une vue du porte-échantillon en éclaté,
- la figure 2 est une vue d'ensemble de l'échantillon dans le porte-échantillon, et
- la figure 3 est une vue en perspective du sommet du porte-échantillon.

Le porte-échantillon comprend un corps 1 creux et cylindrique dont le bas est muni d'un filetage 2 dans lequel une pièce de fond 3 peut être vissée en tournant une poignée 4. Un joint 5 circulaire est comprimé entre le corps 1 et le fond 3 quand celui-ci est serré, et il établit l'étanchéité entre ces deux pièces. Le corps 1 contient un système de serrage d'échantillon 6 composé d'un mors immobile 7 fixé au corps 1, un mors mobile 8 et une paire de tiges 9 fixées au mors immobile 7 et traversant le mors mobile 8, qui peut glisser sur elles. Cependant, des ressorts 10 sont empilés sur les tiges 9 et comprimés entre le mors mobile 8 et des rondelles 11 au bout des tiges 9, de sorte qu'ils repoussent le mors mobile 8 contre le mors immobile 7. Le porte-échantillon comprend encore un couvercle 12 visé au sommet du corps 1, à l'opposé du fond 3. Une ouverture 13 est percée à travers le couvercle 12 ; elle est encadrée par deux excroissances en demi-lune 14 érigées sur le couvercle 12 ; les excroissances 14 sont parallèles, le cercle qui les inscrit a son centre inclus dans le plan de l'ouverture 13, et leurs bords en regard sont creusés d'une rainure 15 dont la section forme un angle droit concave.

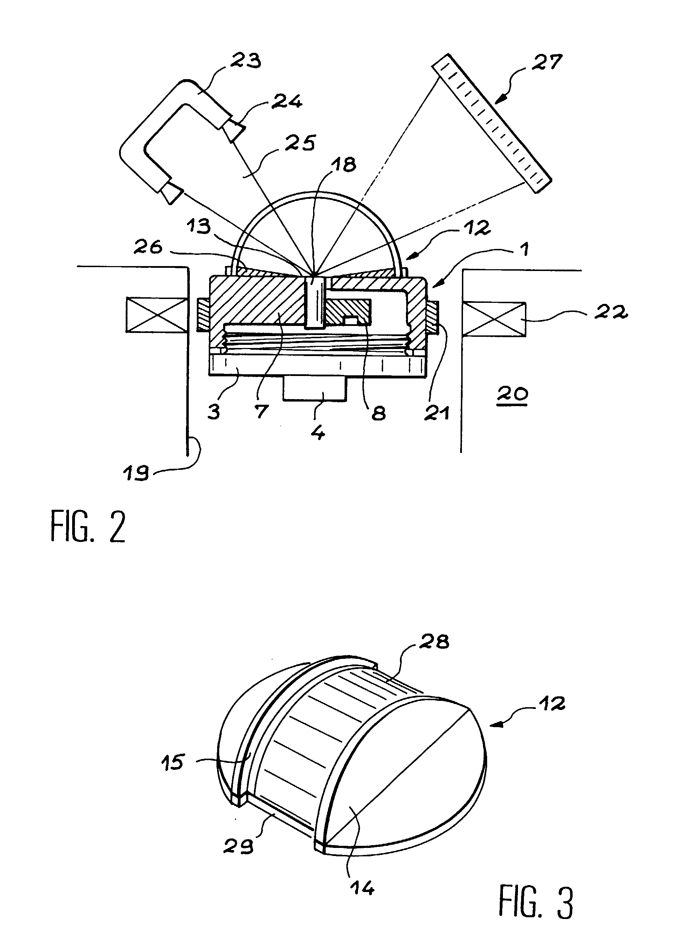

Les mors 7 et 8 délimitent une empreinte 16 entre eux, dans laquelle l'échantillon est placé. Le mors mobile 8 est reculé en engageant un tournevis ou un outil analogue dans une fente 17 de sa face inférieure, l'échantillon est introduit dans l'empreinte 16 à une hauteur qui lui permet d'affleurer à la surface de l'ouverture 13, le mors mobile 8 est relâché pour venir serrer l'échantillon et le fond 3 est revissé. Si l'échantillon est mal placé, il est tiré ou poussé en frottant légèrement contre les mors 7 et 8. On arrive à la situation de la figure 2, où l'échantillon porte la référence 18. Le porte-échantillon est engagé dans un appareil de diffractométrie aux rayons X, dans un évidement 19 d'un bâti 20 à une hauteur déterminée par l'alignement d'une collerette en fer doux 21 entourant le corps 1 et d'un aimant 22 encastré dans le bâti 20 et donnant sur l'évidement 19. Une source 23 de rayons X précédée d'un collimateur 24 émet un faisceau 25 de rayons X vers le porte-échantillon et le focalise en un point au niveau de l'ouverture 13 ; comme l'échantillon 18 affleure à l'ouverture 13, le faisceau 25 est focalisé sur sa surface. On remarque que le couvercle 12 est formé de deux parties biseautées 26 entre les excroissances 14 en demi-lune et que ces parties s'amincissent vers l'ouverture 13 pour former des angles, entre les sommets desquels un plan de référence pour placer la face supérieure de l'échantillon 18 est défini. Les rayons X sont réfléchis par l'échantillon 18 et aboutissent à un réseau de détecteurs 27 : l'étude de ce faisceau réfléchi permet de caractériser l'échantillon 18.

Les excroissances 14 en demi-lune ont pour but d'isoler l'échantillon 18 de l'extérieur quand il est dangereux : une feuille souple 28 illustrée à la figure 3 est tendue entre elles, ses bords sont enfoncés et collés dans les rainures 15 ainsi que dans des encoches 29 qui prolongent les rainures 15 et s'étendent à travers l'épaisseur du couvercle 12 entre les excroissances 14. La feuille 28 est donc collée sur tout son contour. Elle est transparente aux rayonnements utilisés et peut être en plastique, Mylar ou béryllium . Le porte-échantillon peut être utilisé pour d'autres appareils de mesure optique. La forme en demi-lune est préférée pour les excroissances 14 car la feuille 28 est toujours orientée normalement au faisceau 25 quand on fait tourner la source 23 sur un cercle dont le centre est confondu avec le point de focalisation du faisceau 25, ce qui évite tout problème de réfraction.

## Revendications

1. Porte-échantillon pour analyser des caractéristiques cristallographiques d'un échantillon (18), caractérisé en ce qu'il comprend un corps (1) creux à fond amovible (3) et à sommet (12), opposé au fond, percé d'une ouverture (13), un étau contenu dans le corps (1) et composé d'un mors immobile (7) fixé au corps, d'un mors mobile (8) perpendiculairement à l'ouverture (13) et d'un système de liaison (9, 10, 11) entre les mors, à ressorts (10) rappelant le mors mobile vers le mors immobile, les mors délimitant une empreinte (16) de serrage de l'échantillon, et deux excroissances (14) en demi-lune montées sur le sommet, parallèles, encadrant l'ouverture et équipées de surfaces (15) de support d'une feuille transparente (28).

2. Porte-échantillon selon la revendication 1, caractérisé en ce qu'un joint circulaire (5) d'étanchéité est comprimé entre le corps (1) et le fond amovible (3).

3. Porte-échantillon selon la revendication 1, caractérisé en ce que les surfaces de support (15) consistent en des rainures.

4. Porte-échantillon selon la revendication 3, caractérisé en ce que les rainures (15) sont prolongées par des encoches (29) s'étendant à travers l'épaisseur du sommet (12).

5. Porte-échantillon selon l'une quelconque des revendications 1 à 4, caractérisé en ce que le corps est entouré par une collerette (21) en fer doux.
